Europäisches Patentamt

(19) European Patent Office

Office européen des brevets

(11) Veröffentlichungsnummer : **0 187 319**
**B1**

(12) **EUROPÄISCHE PATENTSCHRIFT**

(45) Veröffentlichungstag der Patentschrift :
28.06.89

(51) Int. Cl.⁴ : **G 11 B 15/60**

(21) Anmeldenummer : **85116041.6**

(22) Anmeldetag : **16.12.85**

(54) Bandführungsvorrichtung für Bandtransporteinrichtungen, insbesondere Magnetbandeinrichtungen, und Bandkassetten damit.

(30) Priorität : 24.12.84 DE 8438028 U
05.06.85 DE 8516444 U

(43) Veröffentlichungstag der Anmeldung :
16.07.86 Patentblatt 86/29

(45) Bekanntmachung des Hinweises auf die Patenterteilung : 28.06.89 Patentblatt 89/26

(84) Benannte Vertragsstaaten :
AT BE DE FR GB NL

(56) Entgegenhaltungen :
DE—A— 2 501 866
DE—A— 2 808 998
DE—A— 3 425 401
DE—B— 2 840 069
GB—A— 1 584 630
Die Akte enthält technische Angaben, die nach dem Eingang der Anmeldung eingereicht wurden und die nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Schoettle, Klaus
Bergstrasse 115
D-6900 Heidelberg (DE)
Erfinder : Gliniorz, Lothar
Carl-Bosch-Ring 24
D-6710 Frankenthal (DE)
Erfinder : Schmidts, Kurt
Kornstrasse 10
D-7640 Kehl (DE)
Erfinder : Kamm, Eugen
Am Sonnenhang 20
D-7604 Appenweier (DE)
Erfinder : Dietze, Herbert
Heidenweg 1
D-7611 Berghaupten (DE)
Erfinder : Muenzner, Wulf, Dr.
Lorscher Ring 10
D-6710 Frankenthal (DE)
Erfinder : Gaiser, Dieter
Ulmenweg 7
D-7597 Rheinau (DE)
Erfinder : Buhk, Artur
Bahnhofstrasse 48
D-6701 Erpolzheim (DE)
Erfinder : Dreyer, Juergen
Brandeck-Strasse 11
D-7608 Willstätt (DE)

EP 0 187 319 B1

## Beschreibung

Bandführungsvorrichtung für Bandtransporteinrichtungen, insbesondere Magnetbandeinrichtungen, insbesondere Bandkassetten, bestehend aus einem ruhend auf einem wenigstens teilweise formstabilen Grundkörper mit definierter Oberfläche angeordneten flexiblen Führungsband, das die Führungsfläche für das Magnetband bildet, und das eine größere Länge besitzt als die Länge der Umfangskontur des Grundkörpers, und die überstehenden Endabschnitte des Führungsbandes zusammengehalten sind, sowie eine Bandkassette mit derartiger Bandführungsvorrichtung.

Es sind Bandführungen, insbesondere feststehende Führungen, für dünne, flexible, glatte, streifenförmige Bänder, insbesondere Magnetbänder in Kassetten und/oder Geräten zum Halten bzw. zur reibungsarmen und beschädigungsfreien Führung der Bänder während aller Bewegungsvorgänge, z. B. beim Umspulen, bei Aufnahme- bzw. Abspielvorgängen, des Bandes bekannt.

Für solche Bänder sind eine Vielzahl verschiedener Führungselemente bekannt, die alle die Aufgabe haben, das Band in Ruhestellung und/oder im Bewegungszustand in einer bestimmten Lage, Form oder Bahn zu halten und/oder zu führen, so daß an, oder mit dem Band die gewünschten Maßnahmen durchgeführt werden können. Wo immer es geht, benutzt der Fachmann dazu drehbar gelagerte zylindrische Rollen, die bei sachgerechter Ausführung eine nahezu reibungslose, verschleißfreie und energiesparende Bandbewegung erlauben. In vielen Fällen, so z. B. für in großen Mengen hergestellte kompakte Magnetbandkassetten und/oder -geräte, müssen aus Gründen des Bandgleichlaufs und/oder aus Platz- und Kostengründen usw., feststehende Bandführungen mit relativ kleinen Durchmessern verwendet werden.

Für VHS-Videokassetten sind mit der DE-A-28 17 318 Bandführungen bekannt geworden, die aus metallischen Hohlzylinderkörpern bestehen, die aus einem Metallblechstreifen gebogen sind und mit mindestens einem Einschnitt zum Eingriff eines Verdrehfortsatzes des Kassettengehäuses ausgebildet sind. Die Herstellung dieses Hohlzylinders aus dem Blechstreifen bietet keine wesentlichen Vorteile funktioneller oder wirtschaftlicher Art. Eine mögliche Teilbearbeitung der Oberfläche der Hohlzylinderkörper ist ebenfalls nicht ratsam, da bei kleinen Durchmessern der Führungselemente mit bekannten Bearbeitungsmaschinen (z. B. Geräten zum spitzenlosen Schleifen) eine Zylinderfläche leichter und schneller zu bearbeiten ist, als nur ein Teil davon.

Mit der DE-B-24 31 969 ist eine Bandkassette mit einem festen Befestigungsstift und einer Hülse bekannt, wobei die Hülse eine konkave Oberfläche besitzt und elastisch ausgebildet ist, daß sie bezüglich ihrer normalen Gestalt deformiert aufsteckbar ist und mittels Reibsitzes und Federwirkung am Stift festgehalten wird. Die Herstellung dieser Hülse bereitet wegen ihrer konkaven Oberfläche und ihrer geschlossenen Ringform einige Schwierigkeiten. Zur lagerichtigen Anbringung bzw. Befestigung erfordert diese bekannte Hülse einen zusätzlichen Endflansch als Bezugsfläche.

Es ist mit der DE-C-2 535 276 eine großflächige Bandführung bekannt, die aus einem festen Grundkörper und einem daran befestigten federelastischen und im Hook'schen Bereich verformten und unter Zugspannung befestigten Metallstreifen besteht. Die Befestigung unter Zugspannung erfolgt dabei, um eine konkave Führungsfläche für das Magnetband auszubilden. Bei dieser Bandführung soll ebenfalls eine gewölbte Führungsfläche ausgebildet werden unter Verwendung eines ausreichend dünnen Streifenmaterials, « wozu die Oberfläche des Grundkörpers geeignet geformt sein muß, damit sich der Streifen in gewünschter Weise in gespannter Lage daran anschmiegt ». Praktisch besteht dieser Streifen aus V2A-Stahl und besitzt eine Dicke im Bereich von 0,4 mm (400 µm).

Mit der DE-A-28 08 998 ist eine feststehende Kopftrommel für Bandgeräte bekannt, bei der die Enden einer die Bandlauffläche bildenden Bronze- oder Stahlfolie miteinander durch eine angeschraubte Spannleiste lose überlappend miteinander verbunden werden oder miteinander durch Schweißen, Löten oder Nieten verbunden sind. Schließlich soll die Folie nach dem Spannen noch überarbeitet werden, was die Verwendung einer Folie von größerer Dicke voraussetzt. Damit ist die Kopftrommel nur aufwendig herstellbar, und für einfache Bandführungselemente schließt sich daher eine Verwendung aus.

Es ist Aufgabe der vorliegenden Erfindung, eine Bandführungsvorrichtung bereitzustellen, die trotz zu erfüllender hoher Anforderungen an Verschleißfestigkeit und Oberflächenfeinstruktur wesentlich wirtschaftlicher herstellbar und leichter montierbar ist. Die Erfindung soll auch Bandkassetten mit derartigen Bandführungsvorrichtungen bereitstellen.

Die Aufgabe wird erfindungsgemäß mit einer Bandführungsvorrichtung bzw. einer Bandkassette der eingangs definierten Art dadurch gelöst, daß die Dicke des Führungsbandes höchstens etwa 150 µm beträgt, so daß die Führungsfläche ausschließlich durch die Außenform und/oder die Oberflächenform des Grundkörpers sowie die Oberflächenbeschaffenheit des Führungsbandes bestimmt ist und daß mindestens ein formstabiles, an dem Grundkörper oder in der Nähe des Grundkörpers angeordnetes und in der Lage zum Grundkörper unveränderliches Halteelement vorgesehen ist zur verdrehsicheren Halterung der überstehenden Endabschnitte des Führungsbandes.

Damit sind die an die Bandführungen, insbesondere in Bandkassetten, zu stellenden Anforderungen einfach erfüllbar und niedrige Reibung, geringer Bandverschleiß, niedrige Fehlerraten und ungestörter Bandlauf auch bei extrem langen Standzeiten werden erreicht. Insbesondere ist es möglich, sehr ebene Führungsflächen mit eingestellter Rauhigkeit auszubilden, ohne daß dazu extremer Bearbeitungsaufwand notwendig wäre.

Zweckmäßig ist eine Dicke des Führungsbandes im Bereich zwischen etwa 10 μm und 50 μm. Aus Befestigungsgründen kann das Führungsband aus einem federelastischen Material bestehen.

Praktisch kann das Führungsband mittels Klemmung am Grundkörper und/oder am Halteelement gehalten sein.

Der Grundkörper ist zweckmäßig wenigstens teilweise mit zylindrischer Oberfläche ausgebildet.

Das Halteelement kann einfach mit Schlitz oder Nut, insbesondere als geschlitzter Zylinderkörper, zur Aufnahme der Endabschnitte des Führungsbandes ausgebildet sein. Es ist auch möglich, zwei mit Abstand nebeneinander angeordnete Haltevorsprünge zu verwenden. Falls die Bandtransporteinrichtung eine Bandkassette ist, kann das Halteelement wenigstens teilweise aus einer Gehäusewand bestehen. Die Halteelemente in der Kassette sind zweckmäßig im Spritzguß am Kassettengehäuse hergestellt.

In weiterer Ausführung können die Endabschnitte des Führungsbandes miteinander verbunden sein, wodurch nach Herstellen ein einfaches Einsetzen in das oder die Halteelemente möglich ist. Dabei kann die Verbindung der Endabschnitte auch derart erfolgen, daß eine Wölbung jedes Endabschnittes von der Längsachse fort erfolgt, was ein Einklemmen am Halteelement erleichtert. Vorteilhaft ist ein Führungsband mit einer Omega-Querschnittsform, eine Tropfen- oder Birnenform in eingesetzter Lage ist jedoch ebenfalls günstig.

In weiterer Ausbildung sind die Endabschnitte des Führungsbandes mit Befestigungsöffnungen versehen, wodurch es einfach ist, das Führungsband am Zylinderkörper zu befestigen.

Praktisch ist der Zylinderkörper mit Befestigungsschlitz ausgebildet, womit gleichzeitig eine Verdrehsicherung realisierbar ist.

Im weiteren ist der Zylinderkörper als separates Teil hergestellt und besteht insbesondere aus Polystyrol. Damit ist der als Massenteil fertigbare Zylinderkörper sehr wirtschaftlich herstellbar.

Praktisch ist ein radial und axial mittig angeordneter Zapfen als Halteelement am Zylinderkörper vorgesehen.

Zweckmäßig können Zylinderkörper und Führungsband als vormontierbare Einheit ausgebildet, die Befestigungseinrichtungen umfassen.

Die oben beschriebenen Führungsvorrichtungen sind auch in Verbindung mit Bandkassetten Gegenstand der Erfindung.

Ausführungsbeispiele der Erfindung sind in der Zeichnung dargestellt und nachfolgend beschrieben.

In der Zeichnung zeigen

Figur 1 eine schematische Videokassette

Figur 2a bis 2c Bandführungselemente gemäß Stand der Technik

Figur 3 eine neue Variante von Bandführungselementen gemäß der Erfindung

Figuren 4A bis 4C ein Führungsband, ein Sicherungsteil und ein fertigmontiertes Führungselement

Figuren 5A und 5B eine zweite Ausführung einer Führungsvorrichtung

Figuren 6A und 6B eine dritte Ausführung einer Führungsvorrichtung

Figuren 7 und 8 Ausführungen eines Führungsbandes mit verbundenen Endabschnitten Figur 9 ein Führungsband

Figur 10 einen Hohlzylinderkörper

Figur 11 ein vormontiertes Führungselement

Figur 12 ein fertig eingesetztes und befestigtes Führungselement in einer Bandtransporteinrichtung, insbesondere einer Bandkassette.

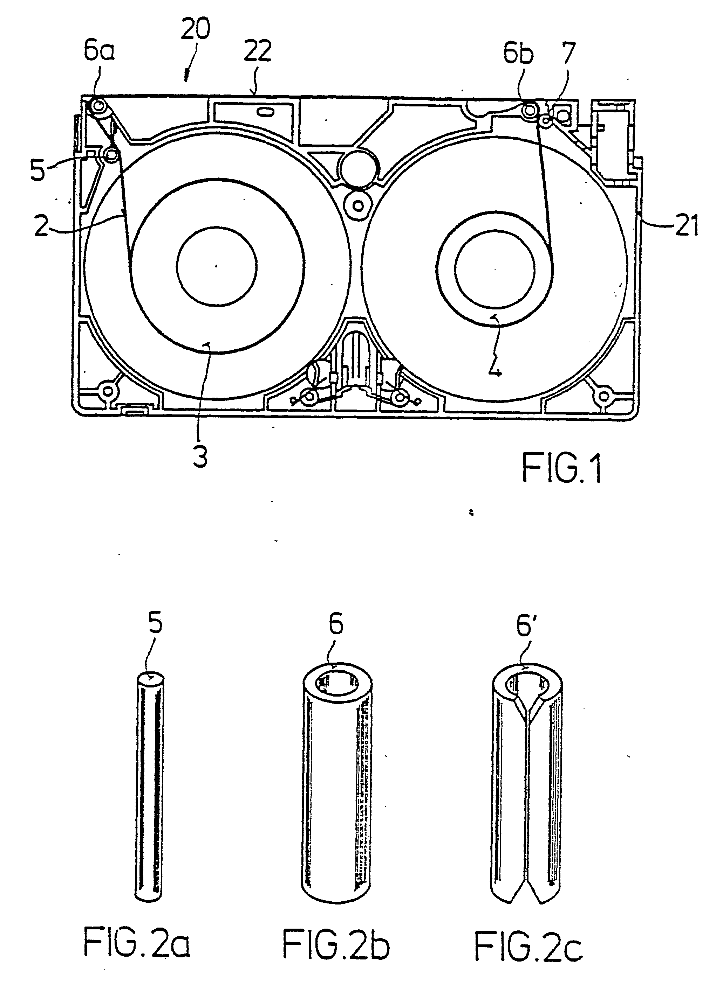

Den typischen Bandverlauf in einer herkömmlichen VHS-Videokassette 20 zeigt Fig. 1. Das Band 2 wird z. B. von der Spule 3 kommend mit seiner Schichtseite über einen zylindrischen Metallstift 5 (Fig. 2a) geführt, der in eine entsprechende Vertiefung des aus Kunststoff gefertigten Kassettengehäuse 21 eingepreßt ist. Danach wird das Band 2 an der ebenfalls feststehenden Führung 6a umgelenkt und längs der Kassettenfront 22 bis zur Führung 6b geführt. Die Führungen 6a und 6b bestehen üblicherweise aus nahtlosen metallischen Hohlzylindern (Fig. 2b) oder sind aus einem Metallblechstreifen zu einem Hohlzylinder (6' in Fig. 2c) gebogen (gemäß DE-A-28 17 318). Von der Führung 6b wird das Band 2 an der Linienrolle 7 vorbei zur Spule 4 geführt und dort aufgewickelt.

Die Erfahrung hat nun gezeigt, daß an die Oberfläche des feststehenden Führungen 5, 6a und 6b hohe Anforderungen zu stellen sind, da es sonst zu zu hoher Reibung, zu Bandverschleiß, Fehleranstieg und in Extremfällen zum Bandstillstand kommen kann. Diese Anforderungen betreffen vor allem die Verschleißfestigkeit, die Ebenheit, die Oberflächenfeinstruktur und deren Rauhigkeit. Andererseits müssen die Führungen auch gegen Korrosion geschützt sein. Alle Forderungen zusammen sind nur durch die Verwendung von teurem, korrosionsfreiem Material, z. B. rostfreiem Stahl, Keramik (DE-A-32 18 097) oder plattiertem Material (z. B. DE-A-31 00 453 und DE-B-28 40 069) und mit aufwendigen Vor- und Nachbearbeitungen, z. B. Überdrehen, Schleifen, Läppen und Polieren, zu erfüllen.

Andererseits sind Führungselemente mit Streifen aus Kunststoff mit reibungsvermindernden Zusätzen wie Graphit usw. (z. B. DE-OS 27 22 509) bzw. mit oberflächenaktiven Zusätzen (DE-OS 32 01 444) bekannt geworden, mit denen sich auch bei Spritzgußherstellung die gewünschten Oberflächencharakteristiken erreichen lassen. Versuche haben jedoch gezeigt, daß sich mit solchen Führungen in gängigen Videokassetten nur relativ kurzzeitig ein störungsfreier Bandbetrieb erreichen läßt, da der Kunststoff durch das Band nach wenigen Betriebsstunden so stark ausgewaschen und/oder geglättet wird, daß die Reibung wieder ansteigt, was bis zum Stillstand der Bänder infolge Adhäsion führen kann.

Die Nachteile der bekannten Bandführungen werden mit Bandführungen gemäß vorliegender Erfindung vermieden, die im folgenden beschrieben sind.

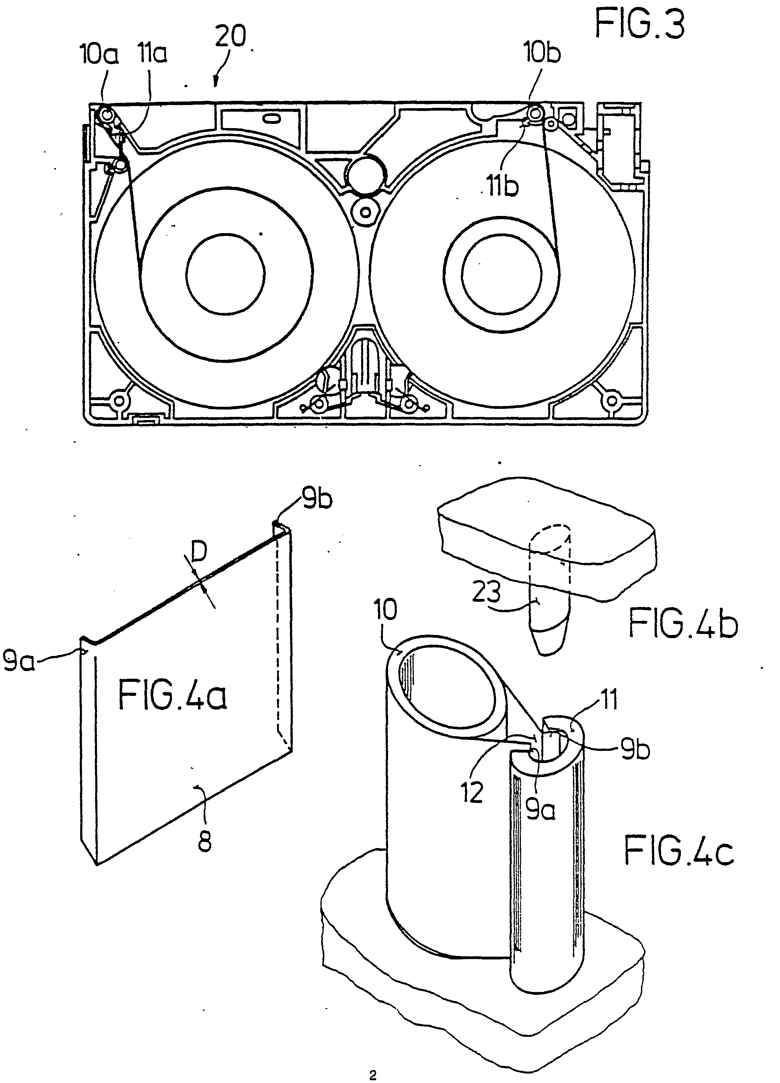

In Figur 3 sind erfindungsgemäße Bandführungsvorrichtungen 10a und 11a sowie 10b und 11b dargestellt, die den bekannten Führungselementen 6a und 6b in der Anordnung in der Kassette 20 entsprechen, aber, wie am dem folgenden hervorgeht, wesentliche Vorteile gegenüber dem Stand der Technik aufweisen.

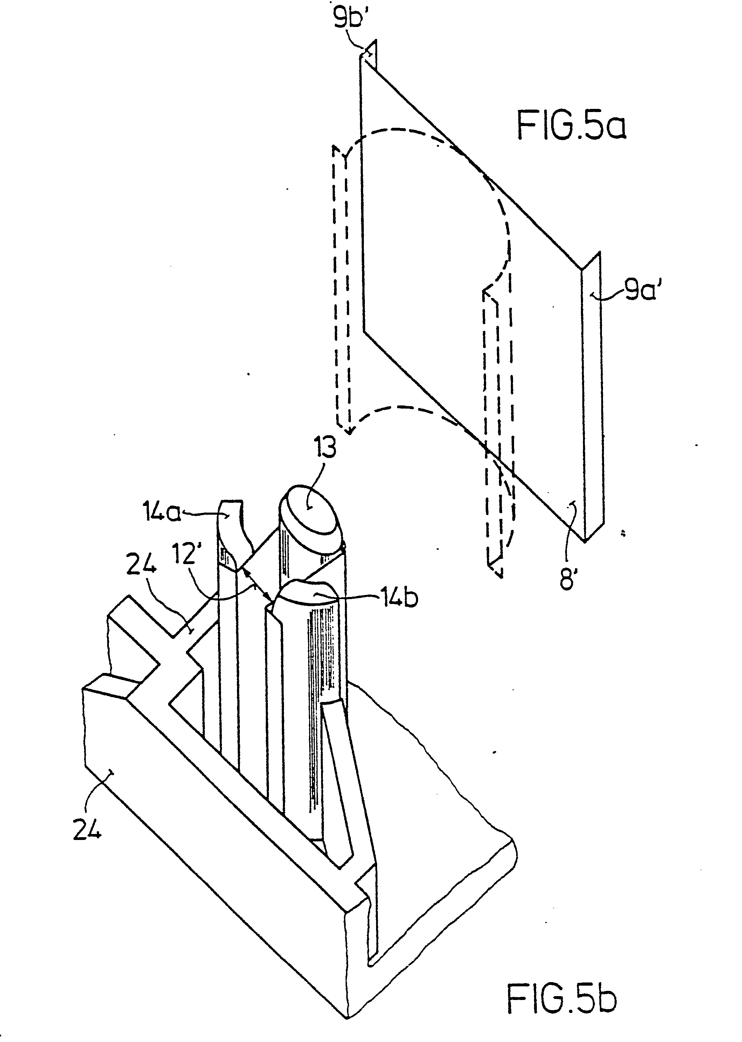

In Figur 4 ist ein erfindungsgemäßes Führungselement 10a oder 10b in größerem Maßstab perspektivisch dargestellt.

Ein Führungsband 8 besteht aus Folienmaterial z. B. einer Metallfolie und besitzt, z. B. durch Biegen, verformte abgebogene oder abgeknickte Außenkanten 9a und 9b. Die Folie wird aus ihrer gestreckten Lage in eine bogenförmige Form zusammengedrückt und über einen Pfosten 10 gestülpt. Dabei hat die in Tropfen- oder Birnenform zusammengedrückte Folie einen Durchmesser, der etwas kleiner ist, als der Durchmesser des Pfostens 10. Der Pfosten 10 kann zur erleichterten Montage der gebogenen Metallfolie 8 mit einer nicht dargestellten Einführschräge versehen und im Regelfall geringfügig höher oder auch niedriger (z. B. etwa halb so hoch) ausgebildet sein als die Breite der Metallfolie 8. In unmittelbarer Nähe des Pfostens 10 ist ein Halteelement, hier als geschlitzter Hohlzylinder 11 ausgebildet, vorgesehen. Der Schlitz 12 besitzt dabei eine Breite, die mindestens etwas größer ist als die doppelte Dicke D des Führungsbandes 8.

Die abgebogenen Außenkanten 9a/b greifen in den Schlitz-Hohlzylinder 11 ein und stützen sich daran ab und verhaken sich an den Innenseiten des Schlitzes 12. Selbst bei sehr geringer Federwirkung des Führungsbandes 8 legt sich dieses an den Pfosten 10 an, wobei eventuell unbeabsichtigte, spritztechnisch bedingte Unebenheiten der Pfostenoberfläche überdeckt und somit kompensiert werden. Darin liegt einer der Vorteile der erfindungsgemäßen Bandführungsvorrichtung, da dadurch auf eine aufwendige Bearbeitung des Pfostens 10 zur Erzeugung einer hochgenauen Bandführungsfläche verzichtet werden kann.

Normalerweise wird der Schlitz-Hohlzylinder 11 etwa gleich hoch gewählt wie der Pfosten 10. Wie Versuche gezeigt haben, ist das Führungsband jedoch auch dann noch ausreichend in seiner Lage gesichert, wenn der Schlitz-Hohlzylinder 11 nur etwa halb so hoch wie der Pfosten 10 ist. Das Führungsband kann auch zwischen Ober- und Unterteilen (gegebenenfalls des Kassettengehäuses) eingesteckt oder eingeklemmt sein.

In Figur 4B ist ein Sicherheitszapfen 23 dargestellt, der leicht konisch zuläuft und am Deckelteil des Gehäuses 21 befestigt, z. B. angeformt, sein kann. In die Öffnung des Schlitz-Hohlzylinders 11 eingreifend ist die Folie 8, wenn gewünscht, damit zusätzlich festlegbar.

Figur 5 zeigt eine Bandführungsvorrichtung als Ersatz für den Führungsstift 5 (Fig. 1). Auch hier wird die erfindungsgemäße Führungsvorrichtung mittels eines einstückig mit dem Gehäuse 21 verbundenen Stiftes 13 ausgebildet, das Führungsband 8' um diesen Stift herumgebogen (eine gestrichelt dargestellte Zwischenform des Bandes zeigt Fig. 5A) und mit seinen abgebogenen Außenkanten 9a', 9b' zwischen am Gehäuse 21 angebrachten Halteelementen, hier zwischen Haltevorsprüngen 14a und 14b, eingehängt. Für den Abstand 12' der Haltevorsprünge 14a und 14b voneinander gilt die oben für den Schlitz 12 gegebene untere Dimensionierungsgrenze. Vorsprünge 14a und 14b können zweckmäßig mit seitlichen Gehäusewänden 24 einstückig ausgebildet sein. Andernfalls können auch die Wände selbst oder Schlitze oder Nuten in Innenwandteilen des Gehäuses 21 für den Haltezweck verwendet werden.

Es ist auch möglich, Halteelemente als separate Klemmelemente auszubilden, die die Enden des Führungsbandes zusammenklemmen.

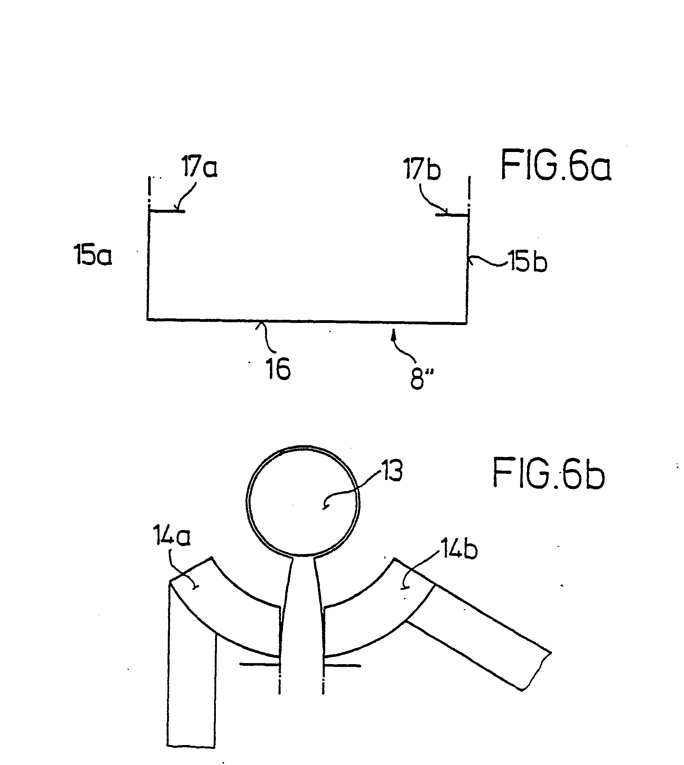

Eine weitere günstige Form der erfindungsgemäßen Bandführungsvorrichtung zeigt Figur 6, in der das Führungsband 8" aus einem Mittelteil 16 besteht, dessen Länge geringfügig kleiner gewählt ist als der Umfang des Stiftes 13. Die gegenüber dem Führungsband 8' verlängerten abgebogenen Kanten 15a und 15b werden wiederum an den Vorsprüngen 14a und 14b abgestützt. So gestaltet legt sich das Führungsband 8", gegebenenfalls durch Federwirkung, selbsttätig eng am größten Teil des Stiftumfanges an und kann nicht verrutschen, auch wenn auf eine weitere Abkantung 17a/b der Führungsbandenden zum Einhängen an den Gehäusevorsprüngen 14a/b verzichtet wird. Diese Ausführung setzt ein federelastisches Material voraus, was jedoch nicht bei den anderen Ausführungen der Fall sein muß.

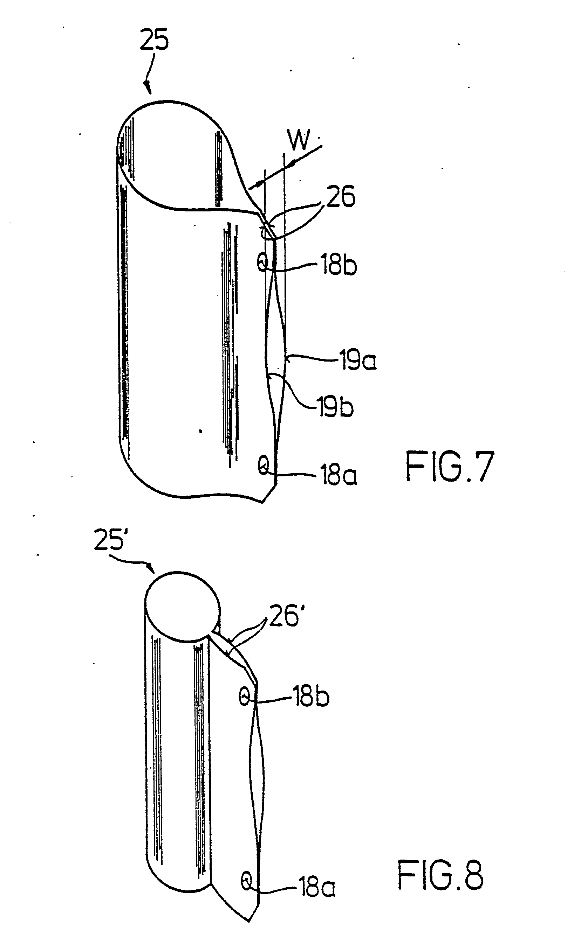

Figuren 7 und 8 zeigen eine weitere Ausbildung der Bandführungsvorrichtung, die sich von den anderen Ausgestaltungen dadurch unterscheidet, daß die Endabschnitte 26, 26' des Führungsbandes 25, 25' vor der Montage miteinander verbunden werden, z. B. durch Punktschweißen oder auch durch andere bekannte Verbindungsmethoden, wie z. B. Umbördeln der Enden usw. In vorteilhafter Form werden die Endabschnitte 26, 26' oben und unten an den Stellen 18a/b verbunden und die Mittelteile 19a und 19b der Endabschnitte 26 voneinanderfort bzw. von ihrer Längsachse fort gebogen, so daß sie Auswölbung w geringfügig größer ist als die Breite des Schlitzes 12 des Schlitz-Hohlzylinders 11 bzw. als der Abstand 12' zwischen den Vorsprüngen 14a und 14b.

In den Ausbildungen der miteinander verbundenen Endabschnitte 26 oder 26' ist eine Verbindung mit dem oder eine Festlegung am Gehäuse 21 über Schlitze oder Nuten in vierlerlei Form möglich. Eventuell können auch Einschnitte in Boden- und/oder Deckelteilen des Gehäuses 21 dafür ausreichen.

Praktisch bietet die erfindungsgemäße Bandführung ausnehmend große wirtschaftliche Vorteile. So beträgt allein die Materialeinsparung im Vergleich mit einer Bandführung gemäß Figur 2b mehr als 80 %, bei Verwendung einer 30 μm starken Metallfolie, und noch mehr bei einer 20 μm Folie. Darüber hinaus bringt die Erfindung auch Vorteile bei der Logistik und Montage, da das Führungsband als Bandwickel bezogen und besonders günstig in einer automatischen Fertigung verarbeitet werden kann.

Als Material wird vorteilhaft handelsüblicher, gezogener bzw. gewalzter hochlegierter, federharter unmagnetischer Edelstahl mit einer Zugfestigkeit von ca. 500 bis 1 200 N/m mit einer Oberflächenrauhigkeit von $R_z < 2$ μm, vorzugsweise $< 1$ μm, verwandt. Eine solche Metallfolie wird zweckmäßig so verwendet, daß Walz- oder Ziehrichtung parallel zur Magnetbandlaufrichtung liegt. Oberflächengezogene und/oder -gewalzte Folien sind besonders günstig, weil sie unter anderem keine spitzen oder scharfen Oberflächenstrukturen aufweisen, was einem schonenden Bandlauf sehr entgegen kommt. Selbstverständlich ist auch die Verwendung anderer Metallfolien möglich. Bei besonders hohen Anforderungen oder bei Verwendung billigeren Materials können die Metallfolien auch einer vorherigen speziellen Oberflächenbehandlung, Plattieren, Läppen, Polieren, Lubrizieren usw. unterzogen werden. Werden spezielle Oberflächenstrukturen gewünscht, so lassen sich diese in einfacher Weise der Metallfolie fortlaufend aufprägen.

Selbstverständlich ist die erfindungsgemäße Bandführung auch unter Verwendung einer Kunststoff-Folie herzustellen. Geeignet sind z. B. Folien aus hochfesten und widerstandsfähigen Kunststoffen wie Polyamidimid, Polyetherimid, Polysulfone, Polyphenylensulfid usw.

Die Dicke des Führungsbandes beträgt (erstens) höchstens etwa 150 μm oder (zweitens) höchstens 100 μm und liegt praktisch vorteilhaft etwa zwischen ca. 10 und 50 μm oder ca. 10 und 80 μm. Metallfolien mit 30 und 20 μm Dicke haben sich hervorragend bewährt, es sind jedoch auch andere Materialien mit anderen Dicken benutzbar. Diese Dickendimensionierung stellt sicher, daß die auf Grobbearbeitung beruhende Oberflächenbeschaffenheit (Mikrostrukturen) am Pfosten 10 oder 13 durch das Führungsband überdeckt werden und dadurch die Oberfläche auf einfachem Wege eine hohe Oberflächengüte erhalten kann. Die Dicke kann auch so gewählt werden, daß die Oberflächenform (Makrostrukturen), z. B. ein Muster auf dem Pfosten, nach außen durchgeformt wird, z. B. um eine gewollte Welligkeit der Führungsfläche herzustellen. Ebenfalls können spezielle Bandführungsquerschnittskonturen (also Außenformen) mit der Formgebung des Pfostens grob ausgebildet werden und durch Anbringung des Führungsbandes verfeinert oder ausgeglichen werden. Der Bereich von ca. 10 bis ca. 80 μm einer Metallfolie, z. B. einer Federstahlfolie, stellt jedenfalls sicher, daß auf jeden Fall eine ausreichende Flexibilität des Führungsbandes gegeben ist. Bei anderen Materialien können diese Bereiche woanders, aber jedenfalls unterhalb von 150 μm, liegen.

Grundkörper und Halteelemente gemäß vorliegender Erfindung können an einem oder mehreren Gehäuseteilen wie Zapfen, Stiften, Wandungen usw. ausgebildet sein, bzw. sich daran abstützen.

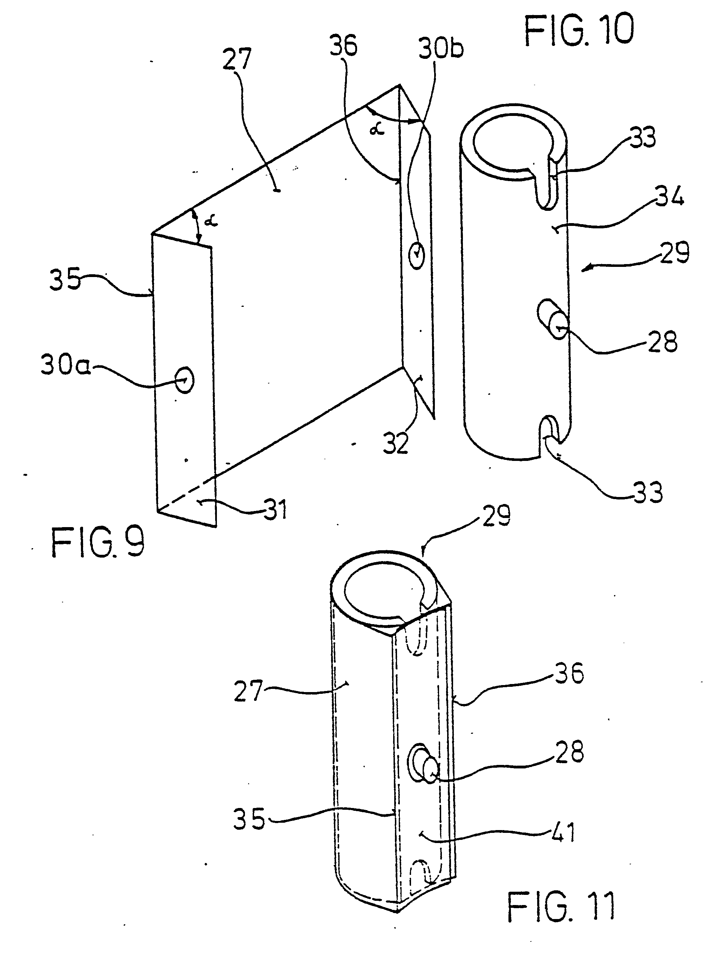

Eine weitere Ausführung der Führungsvorrichtung zeigen die Figuren 9 bis 12.

Figur 9 zeigt den z. B. vom Metallfolien-Band abgeschnittenen, gestanzten und an den Enden 31, 32 jeweils einmal umgebogenen Metallfolienstreifen 27. Der Abbiegungswinkel α ist dabei vorzugsweise < 90° (kleiner 90°) und > 45° (größer 45°) gewählt. Vorzugsweise befinden sich in der Mitte der Enden 31 und 32 Ausnehmungen der Löcher 30.

Der Zylinderkörper, als Stützhülse 29 in Fig. 10 gezeigt, besteht aus einem wirtschaftlich herstellbaren, spritztechnisch leicht verarbeitbaren Kunststoff, z. B. Polystyrol. Zweckmäßig auf einer Mantellinie der Zylinderaußenfläche sind zwei Ausschnitte 33 als Befestigungsschlitze und ein radial vorspringender kurzer Zapfen 28 angeordnet.

Bei der Montage des Metallfolienstreifens 27 auf der Stützhülse 29 wird beispielsweise, wie in Figur 11 dargestellt, zuerst die Öffnung 30a am Zapfen 29 eingehängt, der Metallfolienstreifen 27 um die Zylinderaußenfläche 34 der Stützhülse 29 herumgewickelt und dann am anderen Ende an der Öffnung 36 ebenfalls am Zapfen 28 eingehängt. Die Metallfolie 27 hat an den Biege- oder Knickkanten 35 und 36 soviel federnde Flexibilität, daß dieser Vorgang leicht auszuführen ist und daß sich die Metallfolie 27 nach dem Einhängen am Zapfen 28 selbsttätig unverlierbar verhakt und nur noch mit Werkzeugen davon zu demontieren ist.

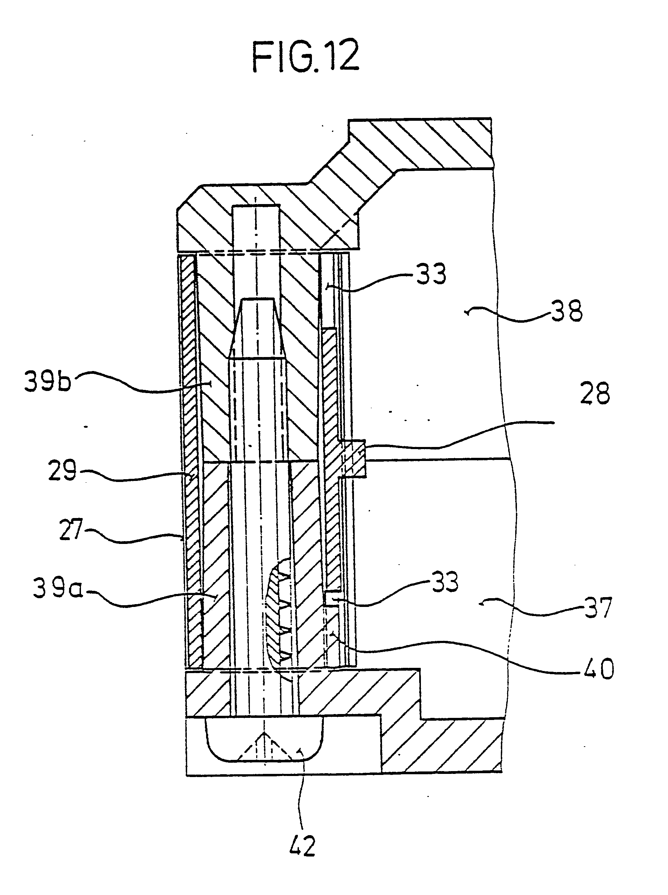

Die so vormontierte Bandführungsvorrichtung oder Metallfolienführung kann dann magaziniert und der Kassettenmontagevorrichtung zur automatischen Montage zugeführt werden. Dort kann sie dann in das in Fig. 12 ausschnittsweise dargestellte Kassettengehäuseunterteil 37 z. B. auf einen Hohlzapfen 39a aufgesteckt werden. Dieser Hohlzapfen 39 besitzt beispielsweise an seinem Fuß an seiner dem Bandweg abgewandten Seite einen Vorsprung 40, der in einen Schlitz 33 der Stützhülse 29 eingreift und diese an einer Verdrehung hindert. Selbstverständlich gibt es auch andere Möglichkeiten der Verdrehsicherung, z. B. dadurch, daß eine entsprechend geformte Gehäuserippe (nicht dargestellt) an der abgeplatteten Fläche 41 der befestigten Metallfolie 27 oder am Zapfen 28 der Stützhülse 29 anliegt.

Nach der Montage der Metallfolienführung im Gehäuseunterteil 12 wird das Gehäuseoberteil 38 mit dem oberen Hohlzapfen 39b aufgesetzt und z. B. mit Schrauben 42 verschraubt.

Es ist praktisch ebenso möglich, die Stützhülse 29 mit der Folie 27, in eine Kreisnut im Gehäuseunterteil 37 einzusetzen, die gegebenenfalls auch im Oberteil 38 vorhanden sein kann. Selbstverständlich ist auch in diesen Fällen die Hülse 29 durch Schrauben in der Praxis festlegbar.

Der Aufbau des erfindungsgemäßen Bandführungselements, bestehend aus Metallfolie und von der Bandtransporteinrichtung trennbarem Stützkörper, hat den Vorteil, daß wesentliche Änderungen an der Bandtransporteinrichtung, insbesondere an einer Bandkassette, nicht notwendig sind. Die Vormontage auf den Stützkörpern, insbesondere den Stützhülsen, erfordert z. B. nur geringfügige Modifikationen am Kassettengehäuse, die leicht nachträglich an vorhandenen Werkzeugen vornehmbar sind. Die Montage der Hülsen ist mit üblichen Automaten möglich.

Wenn beschriebene Bandführungsvorrichtungen auch in erster Linie feststehende Bandführungselemente nachbilden bzw. nachträglich vervollkommen können, so sind jedoch auch beweglich angeordnete, z. B. schwenkbare oder verschiebbare Führungen damit mit denselben Vorteilen ausbildbar.

## Patentansprüche

1. Bandführungsvorrichtung für Bandtransporteinrichtungen, insbesondere Magnetbandeinrichtungen, insbesondere Bandkassetten, bestehend aus einem ruhend auf einem wenigstens teilweise formstabilen Grundkörper (10, 13) mit definierter Oberfläche angeordneten flexiblen Führungsband, das die Führungsfläche für das Magnetband bildet, und das eine größere Länge besitzt als die Länge der Umfangskontur des Grundkörpers (10, 13) und die überstehenden Endabschnitte des Führungsbandes zusammengehalten sind, dadurch gekennzeichnet, daß die Dicke (D) des Führungsbandes (8, 8', 8", 25, 26, 27) höchstens etwa 150 $\mu$m beträgt, so daß die Führungsfläche ausschließlich durch die Außenform und/oder die Oberflächenform des Grundkörpers (10, 13, 29) sowie die Oberflächenbeschaffenheit des Führungsbandes (8, 8', 8", 25, 26, 27) bestimmt ist und daß mindestens ein formstabiles, an dem Grundkörper oder in der Nähe des Grundkörpers angeordnetes und in der Lage zum Grundkörper unveränderliches Halteelement (11, 14a u. 14b, 24, 28) vorgesehen ist zur verdrehsicheren Halterung der überstehenden Endabschnitte (9a, 9b, 9a', 9b', 26, 26', 31, 32) des Führungsbandes.

2. Vorrichtung nach Anspruch 1, gekennzeichnet durch eine Dicke (D) des Führungsbandes im Bereich zwischen etwa 10 $\mu$m und 50 $\mu$m.

3. Vorrichtung nach Anspruch 1 oder 2, dadurch gekennzeichnet, daß das Führungsband (8, 8', 8", 25, 25') aus einem federelastischen Material besteht.

4. Vorrichtung nach Anspruch 1 oder 3, dadurch gekennzeichnet, daß das Führungsband (8, 8', 8", 25, 25') mittels Klemmung am Grundkörper (10, 13) und/oder Halteelement (11, 14a und 14b) gehalten ist.

5. Vorrichtung nach Anspruch 1, dadurch gekennzeichnet, daß das Halteelement (11) mit wenigstens einem Schlitz (12) oder einer Nut zur Aufnahme der Endabschnitte (9a, 9b, 9a', 9b', 26, 26') ausgebildet ist.

6. Vorrichtung nach Anspruch 5, dadurch gekennzeichnet, daß das Halteelement ein geschlitzter Zylinderkörper (11) ist.

7. Vorrichtung nach Anspruch 5, dadurch gekennzeichnet, daß das Halteelement zwei mit Abstand (12') nebeneinander angeordnete Haltevorsprünge (14a und 14b) sind.

8. Vorrichtung nach Anspruch 1, dadurch gekennzeichnet, daß der Grundkörper ein Körper (10, 13, 29) mit zumindest teilweise zylindrischer Außenfläche ist.

9. Vorrichtung nach Anspruch 1 und 8, dadurch gekennzeichnet, daß das Halteelement (28) ein Vorsprung an der Außenfläche (34) des Grundkörpers (29) ist.

10. Vorrichtung nach Anspruch 9, dadurch gekennzeichnet, daß das Halteelement ein radial und mittig an der Mantelfläche (28) des Zylinderkörpers (29) vorgesehener Zapfen (28) ist.

11. Vorrichtung nach Anspruch 1, dadurch gekennzeichnet, daß der Zylinderkörper (29) mit Sicherungsschlitz ausgebildet ist.

12. Vorrichtung nach Anspruch 1 oder 8, dadurch gekennzeichnet, daß der Zylinderkörper (10, 13, 29) als separates Teil im Spritzguß hergestellt ist und insbesondere aus Polystyrol besteht.

13. Vorrichtung nach einem der Ansprüche 1 bis 10, dadurch gekennzeichnet, daß die Endabschnitte des Führungsbandes (27) mit Befestigungsöffnungen (30) versehen ist.

14. Vorrichtung nach einem der Ansprüche 8 bis 13, dadurch gekennzeichnet, daß Zylinderkörper (29) und Führungsband (27) eine vormontierbare Einheit bilden.

15. Vorrichtung nach einem der Ansprüche 5 bis 14, wobei die Bandtransporteinrichtung eine Bandkassette ist, dadurch gekennzeichnet, daß das Halteelement wenigstens teilweise aus einer Gehäusewand (24) der Kassette besteht (Figur 5B).

16. Vorrichtung nach Anspruch 1 und einem oder mehreren der Ansprüche 2 bis 15, dadurch gekennzeichnet, daß die Endabschnitte (26, 26') miteinander verbunden ausgebildet sind.

17. Vorrichtung nach Anspruch 3, 5 und 16, dadurch gekennzeichnet, daß die Verbindung der Endabschnitte (26, 26') derartig ausgebildet ist, daß eine Wölbung (w) jedes Endabschnitts von der Längsachse fort erfolgt.

18. Vorrichtung nach Anspruch 1 und einem oder mehreren der Ansprüche 2 bis 17, dadurch gekennzeichnet, daß das Führungsband in eine Omega-Querschnittsform (Fig. 4C, 5B, 6B, 8) verformt ist.

19. Vorrichtung nach Anspruch 1 und einem oder mehreren der Ansprüche 2 bis 17, dadurch gekennzeichnet, daß das Führungsband in das Halteelement eingesetzt eine Tropfen- oder Birnenform (Fig. 4C, 7) aufweist.

20. Bandkassette, insbesondere Videobandkassette mit einer Bandführungsvorrichtung nach einem der Ansprüche 1 bis 19.

## Claims

1. Tape guide means for a tape transport apparatus, in particular a magnetic tape apparatus, in particular a tape cassette, consisting of a flexible guide belt which is stationary on a partly or wholly dimensionally stable support element having a defined surface, forms the guide surface for the magnetic tape and is longer than the peripheral contour of the support element (10, 13), and the projecting end sections of the guide belt are held together, wherein the guide belt (8, 8', 8", 25, 26, 27) is not more than about 150 μm thick (D), so that the guide surface is determined exclusively by the external shape of the support element (10, 13, 29) and/or the surface shape of this element and the surface structure of the guide belt (8, 8', 8", 25, 26, 27), and one or more dimensionally stable holding elements (11, 14a and 14b, 24, 28) are arranged on or near the support element invariant in position relative to the support element to hold the projecting end sections (9a, 9b, 9a', 9b', 26, 26', 31, 32) of the guide belt so as to prevent rotation.

2. Means as claimed in claim 1, wherein the guide belt is from about 10 to 50 μm thick (D).

3. Means as claimed in either of claims 1 and 2, wherein the guide belt (8, 8', 8", 25, 25') consists of a springy material.

4. Means as claimed in either of claims 1 and 3, wherein the guide belt (8, 8', 8", 25, 25') is held by being jammed onto the support element (10, 13) and/or holding element (11, 14a and 14b).

5. Means as claimed in claim 1, wherein the holding element (11) possesses one or more slots (12) or grooves for holding the end sections (9a, 9b, 9a', 9b', 26, 26').

6. Means as claimed in claim 5, wherein the holding element is a slotted cylindrical element (11).

7. Means as claimed in claim 5, wherein the holding element comprises two holding projections (14a and 14b) arranged at a distance (12') apart.

8. Means as claimed in claim 1, wherein the support element (10, 13, 29) has a partly or completely cylindrical outer surface.

9. Means as claimed in claims 1 and 8, wherein the holding element (28) is a projection on the outer surface (34) of the support element (29).

10. Means as claimed in claim 9, wherein the holding element is a peg (28) provided radially and centrally on the lateral surface (28) of the cylindrical element (29).

11. Means as claimed in claim 1, wherein the cylindrical element (29) is provided with a securing slot.

12. Means as claimed in either of claims 1 and 8, wherein the cylindrical element (10, 13, 29) is produced as a separate part by injection molding and consists in particular of polystyrene.

13. Means as claimed in any of claims 1 to 10, wherein the end sections of the guide belt (27) are provided with fastening openings (30).

14. Means as claimed in any of claims 8 to 13, wherein the cylindrical element (29) and the guide belt (27) form a unit which can be preassembled.

15. Means as claimed in any of claims 5 to 14, wherein the tape transport apparatus is a tape cassette, wherein part of the holding element or all of it consists of a housing wall (24) of the cassette (Figure 5B).

16. Means as claimed in claim 1 and one or more of claims 2 to 15, wherein the end sections (26, 26') are connected to one another.

17. Means as claimed in claims 3, 5 and 16, wherein the end sections (26, 26') are connected in such a way that each end section is curved away (w) from the longitudinal axis.

18. Means as claimed in claim 1 and one or more of claims 2 to 17, wherein the guide belt is shaped so that it has an omega cross-section (Fig. 4C, 5B, 6B, 8).

19. Means as claimed in claim 1 and one or more of claims 2 to 17, wherein the guide belt has a drop shape or pear shape (Fig. 4C, 7) when inserted in the holding element.

20. A tape cassette, in particular a video tape cassette, with a tape guide means as claimed in any of claims 1 to 19.

## Revendications

1. Dispositif de guidage de bande pour appareils de transport de bande, en particulier, appareils à bande magnétique, en particulier cassettes de bandes, constitué d'une bande de guidage flexible reposant par des surfaces définies sur un corps de base (10, 13) de forme au moins partiellement stable, bande qui forme surface de guidage pour la bande magnétique et qui a une longueur supérieure à celle du contour périphérique du corps de base (10, 13) et les sections d'extrémité de la bande de guidage qui dépassent sont retenues ensemble, caractérisé par le fait que l'épaisseur (D) de la bande de guidage (8, 8', 8", 25, 26, 27) est au maximum d'environ 150 μm, de sorte que la surface de guidage est déterminée exclusivement par la forme extérieure et/ou la forme de surface du corps de base (10, 13, 29), ainsi que la caractéristique de surface de la bande de guidage (8, 8', 8", 25, 26, 27) et qu'il est prévu au moins un élément de retenue (11, 14a et 14b, 24, 28) de forme stable disposé contre le corps de base ou au voisinage du corps de base et invariable en position par rapport au corps de base, pour maintenir à l'abri de toute torsion les sections d'extrémités dépassantes (9a, 9b, 9a', 9b', 26, 26', 31, 32) de la bande de guidage.

2. Dispositif selon la revendication 1, caractérisé par une épaisseur (D) de la bande de guidage comprise entre environ 10 μm et 50 μm.

3. Dispositif selon la revendication 1 ou 2, caractérisé par le fait que la bande de guidage (8, 8', 8", 25, 25') est en une matière à élasticité de ressort.

4. Dispositif selon la revendication 1 ou 3, caractérisé par le fait que la bande de guidage (8, 8', 8", 25, 25') est maintenue par serrage contre le corps de base (10, 13) et/ou l'élément de retenue (11, 14a et 14b).

5. Dispositif selon la revendication 1, caractérisé par le fait que l'élément de retenue (11) présente au moins une fente (12) ou une rainure pour recevoir les sections d'extrémité (9a, 9b, 9a', 2b, 2b').

6. Dispositif selon la revendication 5, caractérisé par le fait que l'élément de retenue est un corps cylindrique fendu (11).

7. Dispositif selon la revendication 5, caractérisé par le fait que l'élément de retenue est formé par deux saillies de retenue (14a et 14b) disposées côte à côte à une certaine distance (12) l'une de l'autre.

8. Dispositif selon la revendication 1, caractérisé par le fait que le corps de base est un corps (10, 13, 29) à surface extérieure au moins partiellement cylindrique.

9. Dispositif selon la revendication 1 et 8, caractérisé par le fait que l'élément de retenue (28) est une saillie sur la surface extérieure (34) du corps de base (29).

10. Dispositif selon la revendication 9, caractérisé par le fait que l'élément de retenue est un téton (28) radial, prévu au milieu de la surface enveloppe du corps cylindrique (29).

11. Dispositif selon la revendication 1, caractérisé par le fait que le corps cylindrique (29) présente des fentes de sécurité.

12. Dispositif selon la revendication 1 ou 8, caractérisé par le fait que le corps cylindrique (10, 13, 29) est fabriqué, comme partie séparée, par injection et est, en particulier, en polystyrène.

13. Dispositif selon l'une des revendications 1 à 10, caractérisé par le fait que les sections d'extrémité de la bande de guidage (27) sont munies d'ouvertures de fixation (30).

14. Dispositif selon l'une des revendications 8 à 13, caractérisé par le fait que le corps cylindrique (29) et la bande de guidage (27) forment une unité prête pour le montage.

15. Dispositif selon l'une des revendications 5 à 14, où l'appareil de transport de bande est une cassette de bande, caractérisé par le fait que l'élément de retenue est constitué au moins partiellement par une paroi de boîtier de la cassette (fig. 5b).

16. Dispositif selon la revendication 1 et l'une ou plusieurs des revendications 2 à 15, caractérisé par le fait que les sections d'extrémité (26, 26') sont reliées entre elles.

17. Dispositif selon les revendications 3, 5 et 16, caractérisé par le fait que la liaison des sections d'extrémité (26, 26') est réalisée de telle sorte qu'il se produit un bombement (w) de chaque section d'extrémité, partant de l'axe longitudinal.

18. Dispositif selon la revendication 1 et l'une des revendications 2 à 17 caractérisé par le fait que la bande de guidage est déformée (fig. 4c, 5b, 6b, 8) en prenant en coupe une forme d'oméga.

19. Dispositif selon la revendication 1 et l'une ou plusieurs des revendications 2 à 17 caractérisé par le fait que la bande de guidage insérée dans l'élément de retenue prend une forme de goutte ou de poire (fig. 4c, 7).

20. Cassette de bande, en particulier cassette de bande vidéo, munie d'un dispositif de guidage de bande selon l'une des revendications 1 à 19.

FIG.1

FIG.2a    FIG.2b    FIG.2c

FIG.3

10a 11a 20 10b

11b

9b

D

9a

FIG.4a

8

23

10

FIG.4b

11

9b

12

9a

FIG.4c

9b'

FIG.5a

9a'

13

14a

12'

24

14b

24

8'

FIG.5b

## FIG.6a

17a

17b

15a

15b

16

8"

## FIG.6b

13

14a

14b

FIG.7

FIG.8

FIG. 10

FIG. 9

FIG. 11

# FIG.12